# EUROPÄISCHE PATENTSCHRIFT

(11) **EP 2 389 561 B1**
(45) Veröffentlichungstag und Bekanntmachung des Hinweises auf die Patenterteilung: **06.04.2016**
(21) Anmeldenummer: 09793499.6
(22) Anmeldetag: 03.12.2009
(51) Int. Cl.: G01C 19/56, G01C 19/5747

(54) **DREHRATENSENSOR**
YAW RATE SENSOR
CAPTEUR DE VITESSE DE ROTATION

(30) Priorität: 21.01.2009 DE 102009000345
(43) Veröffentlichungstag der Anmeldung: 30.11.2011
(73) Patentinhaber: Robert Bosch GmbH, 70469 Stuttgart (DE)
(72) Erfinder: CLASSEN, Johannes, 72764 Reutlingen (DE)
(86) Internationale Anmeldenummer: PCT/EP2009/066302
(87) Internationale Veröffentlichungsnummer: WO 2010/083918

(56) Entgegenhaltungen:
- US-A1- 2004 154 397
- US-A1- 2005 081 631
- US-A1- 2008 168 838
- US-B1- 6 349 597

## Beschreibung

Die vorliegende Erfindung betrifft einen Drehratensensor gemäß Patentanspruch 1.

### Stand der Technik

Mikromechanische Drehratensensoren sind aus dem Stand der Technik bekannt. Solche Drehratensensoren kommen in verschiedenen Applikationsfeldern, im Automobilbereich beispielsweise für ESP-Systeme, für Roll-Over-Sensierungen oder zu Navigationszwecken zum Einsatz.

Bei diesen Drehratensensoren werden Teile der Sensorstruktur aktiv in eine Antriebsschwingung entlang einer ersten Richtung versetzt, die beispielsweise parallel zu einer Substratoberfläche orientiert ist. Bei Auftreten einer äußeren Drehrate um eine Detektionsachse, die senkrecht zur ersten Richtung und beispielsweise ebenfalls parallel zur Substratoberfläche orientiert ist, wirken Coriolis-Kräfte auf die schwingenden Teile der Sensorstruktur. Diese periodisch mit der Frequenz der Antriebsschwingung veränderlichen Coriolis-Kräfte bewirken periodische Auslenkungen von Teilen der Sensorstruktur entlang einer dritten Richtung, die senkrecht zu Antriebsrichtung und Detektionsachse orientiert ist. Die dritte Richtung kann beispielsweise senkrecht zur Substratoberfläche orientiert sein. An der Sensorstruktur sind Detektionsmittel angebracht, die die Auslenkung der Teile der Sensorstruktur über Elektroden kapazitiv detektieren.

Bekannte Drehratensensoren weisen lediglich eine fest mit dem Substrat verbundene Detektionselektrode pro beweglicher Sensorstruktur auf. Dies hat den Nachteil, dass die Nutzkapazität zwischen Detektionselektrode und beweglicher Sensorstruktur gering ist. Außerdem ist eine differentielle Detektion der Auslenkung des beweglichen Sensorelements mit nur einer ortsfesten Detektionselektrode pro beweglichem Sensorelement nicht möglich.
Die US 2008/0168838 A1 beschreibt einen Drehratensensor mit einer volldifferentiellen Elektrodenanordnung, bei dem als obere Gegenelektrode ein geeignet strukturierter und elektrisch kontaktierter Bereich in einer Sensorkappe verwendet wird. Bei dieser Lösung ist es allerdings sehr schwierig, den Abstand zwischen beweglicher Sensorstruktur und oberer Festelektrode trotz aller Fertigungstoleranzen genauso groß einzustellen wie den Abstand zwischen beweglicher Sensorstruktur und unterer Festelektrode.

Ebenfalls aus dem Stand der Technik bekannt (siehe z.B. US6349597) sind Drehratensensoren mit zwei gekoppelten beweglichen Sensorteilstrukturen, die zu einer gekoppelten Antriebsschwingung mit antiparalleler Auslenkung der beweglichen Teilstrukturen anregbar sind. Wegen der antiparallelen Antriebsschwingungen der beiden Teilstrukturen führt eine auf den Drehratensensor wirkende Drehrate zu einer antiparallelen Auslenkung der beiden Teilstrukturen. Eine Auswertung der Kapazitätsänderungen zwischen den beweglichen Teilstrukturen und den jeweils zugeordneten Festelektroden erlaubt eine differentielle Detektion der wirkenden Drehrate. Ein Nachteil dieser bekannten Drehratensensoren besteht in ihrer Vibrationsempfindlichkeit und der nur schwer unterdrückbaren Empfindlichkeit für die Anregung einer Parallelmode.

### Offenbarung der Erfindung

Aufgabe der vorliegenden Erfindung ist es, einen verbesserten Drehratensensor bereitzustellen. Diese Aufgabe wird durch einen Drehratensensor mit den Merkmalen des Anspruchs 1 gelöst.
Kern der Erfindung ist die Verwendung einer zusätzlichen mikromechanischen Funktionsebene im Sensorkern, die unabhängig von einer darunter liegenden Leiterbahnebene und einer darüber liegenden weiteren Funktionsebene mit oberflächenmikromechanischen Prozessen strukturiert werden kann. Durch die Dreischichtenanordnung lässt sich auf einfache Weise eine volldifferentielle Elektrodenanordnung für jede Sensorstruktur des Drehratensensors realisieren.

Ein erfindungsgemäßer Drehratensensor umfasst ein Substrat mit einer Substratoberfläche, ein über der Substratoberfläche angeordnetes erstes bewegliches Element mit einem Antriebsrahmen und einer ersten Detektionsmasse, eine erste Elektrode, die beabstandet unterhalb der ersten Detektionsmasse angeordnet und mit der Substratoberfläche verbunden ist und eine zweite Elektrode, die beabstandet oberhalb der ersten Detektionsmasse angeordnet und mit der Substratoberfläche verbunden ist. Dabei ist der Antriebsrahmen über mindestens eine Antriebsfeder mit dem Substrat verbunden, die Detektionsmasse über mindestens eine Detektionsfeder mit dem Antriebsrahmen verbunden, das erste bewegliche Element zu einer Antriebsschwingung parallel zur Substratoberfläche anregbar und die erste Detektionsmasse senkrecht zur Substratoberfläche auslenkbar.

Vorteilhafterweise ermöglicht der erfindungsgemäße Drehratensensor eine differentielle Auswertung der Auslenkung des beweglichen Elements senkrecht zur Substratoberfläche. Die beidseitige Elektrodenanordnung gestattet einen vollresonanten Betrieb des Drehratensensors, bei dem die Frequenzen von Antriebsschwingung und Detektionsschwingung durch Anlegen elektrostatischer Mitkopplungsspannungen an die Elektroden einander angeglichen werden, ohne dass dies die Abstände zwischen dem beweglichen Element und den Elektroden beeinflusst. Dadurch wird ein Kontakt zwischen beweglichem Element und Elektroden (Schnappen) verhindert. Ein weiterer Vorteil des erfindungsgemäßen Drehratensensors ist seine reduzierte Vibrationsanfälligkeit.

In einer bevorzugten Ausführungsform sind eine Leiterbahnebene, eine erste Funktionsebene und eine zweite Funktionsebene geschichtet übereinander angeordnet, wobei die Leiterbahnebene mit der Substratoberfläche verbunden ist. Dabei ist der Antriebsrahmen in der ersten Funktionsebene und der zweiten Funktionsebene angeordnet, die erste Detektionsmasse zumindest teilweise in der ersten Funktionsebene angeordnet, die erste Elektrode in der Leiterbahnebene angeordnet und die zweite Elektrode in der zweiten Funktionsebene angeordnet. Vorteilhafterweise lässt sich dadurch auf einfache Weise eine beidseitige Elektrodenanordnung realisieren.

In einer besonders bevorzugten Ausführungsform weist der Drehratensensor ein zweites bewegliches Element mit einer zweiten Detektionsmasse auf, wobei die erste und die zweite Detektionsmasse über eine Koppelfeder miteinander verbunden und das erste und das zweite bewegliche Element zu einer gekoppelten Antriebsschwingung parallel zur Substratoberfläche anregbar sind. Vorteilhafterweise erhöht dies die Genauigkeit und die Störunempfindlichkeit des Drehratensensors.

In einer Weiterbildung sind das erste und das zweite bewegliche Element zu einer gekoppelten Antriebsschwingung mit antiparalleler Auslenkung des ersten und des zweiten beweglichen Elements anregbar. Vorteilhafterweise kann dadurch eine durch eine Drehrate bewirkte antiparallele Auslenkung der Detektionsmasse senkrecht zur Substratoberfläche von einer durch eine Linearbeschleunigung bewirkten parallelen Auslenkung der Detektionsmassen senkrecht zur Substratoberfläche unterschieden werden.

Es ist zweckmäßig, wenn das erste bewegliche Element einen Stabilisierungsrahmen aufweist, der zumindest teilweise in der zweiten Funktionsebene angeordnet ist. Bevorzugt weist das erste bewegliche Element dabei eine Wannenform mit einem in der ersten Funktionsebene angeordneten Boden und einem durch den Stabilisierungsrahmen gebildeten Rand in der ersten Funktionsebene und der zweiten Funktionsebene auf. Dadurch wird eine hinreichende Stabilität des ersten beweglichen Elements gewährleistet.

Zweckmäßigerweise weist das erste bewegliche Element mindestens einen Durchbruch auf, wobei die zweite Elektrode durch den Durchbruch an dem Befestigungspunkt mit der Substratoberfläche verbunden ist.

Bevorzugt ist mindestens eine Antriebskammstruktur vorhanden, um das erste bewegliche Element zu der Antriebsschwingung anzuregen. Bevorzugt ist das erste bewegliche Element außerdem über mindestens eine Außenfeder mit der Substratoberfläche verbunden.

Es ist zweckmäßig, wenn die erste Funktionsebene und die zweite Funktionsebene aus leitfähigem Silizium bestehen.

In einer Weiterbildung der Erfindung ist mindestens eine weitere Elektrode unterhalb und/oder oberhalb der ersten Detektionsmasse angeordnet. Vorteilhafterweise gestattet diese weitere Elektrode eine elektrostatische Mitkopplung der ersten Detektionsmasse, um eine Übereinstimmung der Frequenz der Antriebsschwingung mit der Frequenz der Auslenkung des beweglichen Elements senkrecht zur Substratoberfläche sicherzustellen. Alternativ kann die weitere Elektrode auch für eine Quadraturkompensation verwendet werden. Die weitere Elektrode kann auch zur Lageregelung der ersten Detektionsmasse dienen.

In einer Weiterbildung ist der Drehratensensor mit einer Auswertschaltung verbunden, die dazu ausgebildet ist, aus einer Änderung von Kapazitäten zwischen der ersten Detektionsmasse und den ersten und zweiten Elektroden auf eine Auslenkung der ersten Detektionsmasse senkrecht zur Substratoberfläche zu schließen und aus der Auslenkung der ersten Detektionsmasse auf eine auf den Drehratensensor wirkende Drehrate zu schließen. Vorteilhafterweise ermöglicht dies eine automatische Messung einer Drehrate.

Die Erfindung wird nun anhand der beigefügten Figuren näher erläutert. Dabei werden für gleiche oder gleich wirkende Teile einheitliche Bezugszeichen verwendet. Es zeigen:
Figur 1 eine schematische Aufsicht auf eine erste Ausführungsform eines Drehratensensors;
Figur 2 einen ersten Schnitt durch die erste Ausführungsform des Drehratensensors;
Figur 3 einen zweiten Schnitt durch die erste Ausführungsform des Drehratensensors;
Figur 4 eine zweite Ausführungsform eines Drehratensensors;
Figur 5 einen Schnitt durch die zweite Ausführungsform des Drehratensensors;
Figur 6 eine dritte Ausführungsform eines Drehratensensors;
Figur 7 einen Schnitt durch die dritte Ausführungsform des Drehratensensors;
Figur 8 eine vierte Ausführungsform eines Drehratensensors;
Figur 9 einen Schnitt durch die vierte Ausführungsform des Drehratensensors;
Figur 10 eine fünfte Ausführungsform eines Drehratensensors;
Figur 11 einen Schnitt durch die fünfte Ausführungsform des Drehratensensors;
Figur 12 eine sechste Ausführungsform eines Drehratensensors und
Figur 13 einen Schnitt durch die sechste Ausführungsform des Drehratensensors.

### Ausführungsformen der Erfindung

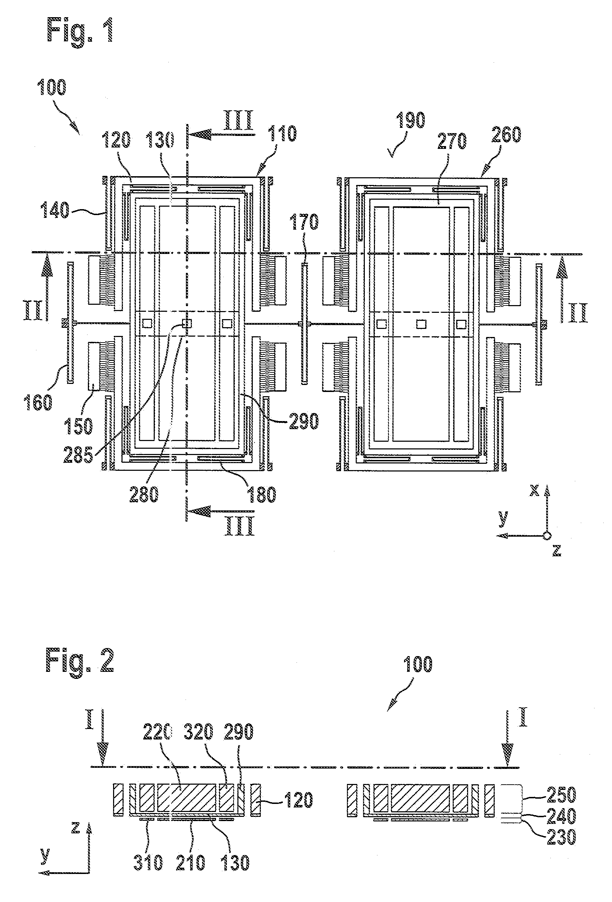

Figur 1 zeigt in schematischer Darstellung eine Aufsicht auf eine erste Ausführungsform eines Drehratensensors 100. Der Drehratensensor 100 ist aus einem Substrat gefertigt und über einer Substratoberfläche 190 in der x-y-Ebene angeordnet, die in der Darstellung der Figur 1 in der Papierebene liegt. Das Substrat kann beispielsweise ein Siliziumsubstrat sein. Der Drehratensensor 100 umfasst ein erstes bewegliches Element 110 und ein zweites bewegliches Element 260, wobei das erste bewegliche Element 110 und das zweite bewegliche Element 260 symmetrisch zueinander ausgebildet und in y-Richtung nebeneinander angeordnet sind. Im Folgenden wird das erste bewegliche Element 110 beschrieben. Die Beschreibung gilt analog für das zweite bewegliche Element 260.

Das erste bewegliche Element 110 weist einen Antriebsrahmen 120 auf. In der Ausführungsform der Figur 1 umfasst der Antriebsrahmen 120 zwei U-förmige Teilstücke, deren Öffnungen einander zugewandt sind und damit einen in der x-y-Ebene liegenden Flächenabschnitt weitgehend umschließen. In dem durch den Antriebsrahmen 120 umschlossenen Flächenabschnitt ist eine erste Detektionsmasse 130 angeordnet.

Der Antriebsrahmen 120 ist über vier Antriebsfedern 140 mit der Substratoberfläche 190 verbunden. Je eine der Antriebsfedern 140 ist an jedem Schenkel der beiden U-förmigen Teilstücke des Antriebsrahmens 120 angeordnet. Jede Antriebsfeder 140 besteht aus einem U-förmig geformten Substratbalken, dessen eines Ende mit der Substratoberfläche 190, dessen anderes Ende mit dem Antriebsrahmen 120 verbunden ist. Jede Antriebsfeder 140 ist in y-Richtung elastisch, in x- und z-Richtung jedoch weitgehend inelastisch. Weiter ist der Antriebsrahmen 120 mit vier Antriebskammstrukturen 150 verbunden. An jedem Schenkel der beiden U-förmigen Teile des Antriebsrahmens 120 ist jeweils eine Antriebskammstruktur 150 angeordnet. Jede Antriebskammstruktur 150 besteht aus einem mit der Substratoberfläche 190 verbundenen Abschnitt, der eine Reihe paralleler, dem Antriebsrahmen 120 zugewandter kammartiger Zinken aufweist, und einem mit dem Antriebsrahmen 120 verbundenen Abschnitt mit einer Reihe paralleler kammartiger Zinken, die mit den Zinken des mit der Substratoberfläche 190 verbundenen Abschnitts der Antriebskammstruktur 150 in Eingriff stehen. Die vier Antriebskammstrukturen 150 gestatten, durch Anlegen geeigneter Spannungen den Antriebsrahmen 120 in eine Schwingung in Richtung der y-Achse zu versetzen. Dabei bewirken die Antriebskammstrukturen 150 auslenkende, die Antriebsfedern 140 rückstellende Kräfte. Es können auch mehr oder weniger als jeweils vier Antriebsfedern 140 und Antriebskammstrukturen 150 pro beweglichem Element 110, 260 vorhanden sein.

Die erste Detektionsmasse 130 ist über insgesamt acht Detektionsfedern 180 mit dem Antriebsrahmen 120 verbunden. An beiden Enden aller vier Außenkanten der ersten Detektionsmasse 130 ist je eine Detektionsfeder 180 angeordnet. Jede Detektionsfeder 180 besteht aus einem U-förmig gestalteten Substratbalken, dessen eines Ende mit dem Antriebrahmen 120 und dessen anderes Ende mit der ersten Detektionsmasse 130 verbunden ist. Gemeinsam erlauben die Detektionsfedern 180 eine Auslenkung der ersten Detektionsmasse 130 gegen den Antriebsrahmen 120 in z-Richtung, während eine Auslenkung der ersten Detektionsmasse 130 gegen den Antriebsrahmen 120 in x- und y-Richtung im Wesentlichen verhindert wird. Dadurch wird eine Antriebsbewegung des Antriebsrahmens 120 in y-Richtung auf die erste Detektionsmasse 130 übertragen.

Das zweite bewegliche Element 260 weist eine zweite Detektionsmasse 270 auf. Die erste Detektionsmasse 130 und die zweite Detektionsmasse 270 sind über eine Koppelfeder 170 miteinander verbunden. Die Koppelfeder 170 besteht aus einem rechteckigen, in x-Richtung gestreckten Ring aus einem Substratbalken, der mittels zweier weiterer Substratbalken mit der ersten und der zweiten Detektionsmasse 130, 260 verbunden ist. Die Koppelfeder 170 weist in y- und in z-Richtung eine wohldefinierte Elastizität auf, während sie in x-Richtung steif ist. Dies bewirkt eine Kopplung der Schwingungen der Detektionsmassen 130, 270 in y- und z-Richtung.

Die erste Detektionsmasse 130 ist auf der der zweiten Detektionsmasse 270 abgewandten Seite außerdem über eine Außenfeder 160 mit der Substratoberfläche 190 verbunden. Die Außenfeder 160 wird durch einen Substratbalken gebildet, der die Außenkanten eines langgezogenen, in x-Richtung orientierten Rechtecks umschreibt und über einen Steg mit der ersten Detektionsmasse 130 verbunden ist. Die Außenfeder 160 weist in y- und z-Richtung eine wohldefinierte Elastizität auf, während sie in x-Richtung im Wesentlichen steif ist. Die zweite Detektionsmasse 270 ist über eine weitere Außenfeder auf der der ersten Detektionsmasse 130 abgewandten Seite ebenfalls mit der Substratoberfläche 190 verbunden. In einer alternativen Ausführungsform können die Außenfedern 160 entfallen.

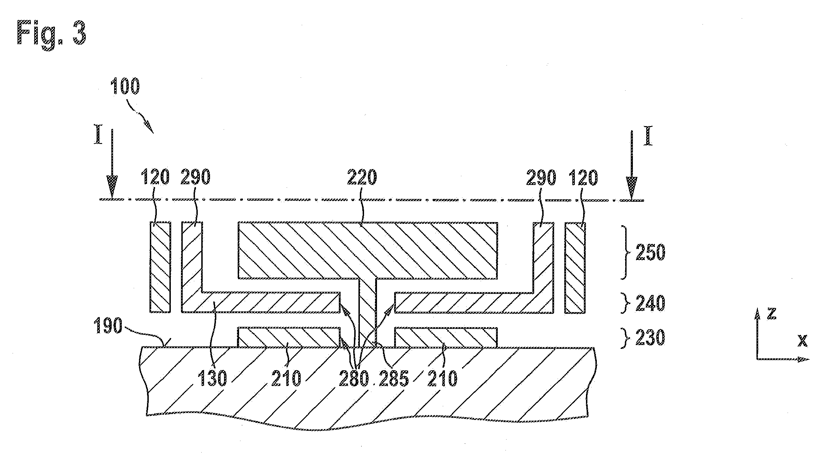

Figur 2 zeigt schematisch einen zur y-z-Ebene parallelen Schnitt durch den Drehratensensor 100 der Figur 1. Figur 3 zeigt schematisch einen zur x-z-Ebene parallelen Schnitt durch den Drehratensensor 100 der Figur 1. In Figuren 2 und 3 ist erkennbar, dass der Drehratensensor 100 aus drei in z-Richtung übereinander liegenden Schichten gefertigt ist. Zuunterst auf oder in der Substratoberfläche 190 befindet sich eine Leiterbahnebene 230, die beispielsweise aus vergrabenem Polysilizium bestehen kann. Darüber ist eine erste Funktionsebene 240 angeordnet, die beispielsweise eine Dicke von 2 µm aufweisen und aus epitaktisch aufgewachsenem leitfähigen Silizium bestehen kann. Darüber ist eine zweite Funktionsebene 250 angeordnet, die beispielsweise eine Dicke von 10 µm oder 20 µm aufweisen und aus epitaktisch aufgewachsenem leitfähigem Silizium bestehen kann. Die Leiterbahnebene 230, die erste Funktionsebene 240 und die zweite Funktionsebene 250 sind abschnittsweise durch Leerräume voneinander getrennt.

Aus Figuren 2 und 3 wird deutlich, dass die erste Detektionsmasse 130 einen wannenförmigen Querschnitt aufweist. Dabei wird ein durch einen Bereich der ersten Funktionsebene 240 gebildeter Boden der ersten Detektionsmasse 130 von einem in der ersten Funktionsebene 240 und der zweiten Funktionsebene 250 gebildeten Stabilisierungsrahmen 290 umgrenzt. Der Stabilisierungsrahmen 290 stabilisiert die erste Detektionsmasse 130.
In der Leiterbahnebene 230 unterhalb der ersten Detektionsmasse 130 ist eine erste Elektrode 210 vorgesehen. In der zweiten Funktionsebene 250, oberhalb der ersten Detektionsmasse 130 und durch den Stabilisierungsrahmen 290 der ersten Detektionsmasse 130 umgrenzt, ist eine zweite Elektrode 220 vorgesehen. Die erste Elektrode 210 und die zweiten Elektrode 220 weisen bevorzugt ähnliche laterale Abmessungen in x-y-Richtung auf.
Die erste Elektrode 210 und der in der ersten Funktionsebene 240 gelegene Bodenbereich der ersten Detektionsmasse 130 weisen einen Durchbruch 280 auf.
Dies ist in Figur 3 erkennbar. Im Bereich des Durchbruchs 280 ist die zweite Elektrode 220 über einen pfostenförmigen Befestigungspunkt 285 mit der Substratoberfläche 190 verbunden. In einem zur x-z-Ebene parallelen Schnitt wie in Figur 3 weist die zweite Elektrode 220 somit einen T-förmigen Querschnitt auf. Die erste Elektrode 210 und die zweite Elektrode 220 können über die Leiterbahnebene 230 elektrisch mit einer in den Figuren nicht dargestellten Steuer- und Auswertelektronik verbunden sein.
Wie Figur 2 zeigt, sind in y-Richtung beidseitig neben der ersten Elektrode 210 in der Leiterbahnebene 230 unterhalb der ersten Detektionsmasse 130 zwei erste weitere Elektroden 310 angeordnet. Außerdem sind in y-Richtung beidseitig neben der zweiten Elektrode 220 in der zweiten Funktionsebene 250 oberhalb der ersten Detektionsmasse 130 zwei zweite weitere Elektroden 320 angeordnet. Die zweiten weiteren Elektroden 320 sind ebenfalls im Bereich des Durchbruchs 280 mit der Substratoberfläche 190 verbunden.
Die Antriebsfedern 140, die Außenfedern 160, die Koppelfedern 170 und Detektionsfedern 180 werden bevorzugt durch Material der ersten Funktionsebene 240 und der zweiten Funktionsebene 250 gebildet.
Das erste bewegliche Element 110 und das zweite bewegliche Element 260 des Drehratensensors 100 können mittels der Antriebskammstrukturen 150 in eine gekoppelte Antriebsschwingung mit antiparalleler Auslenkung der beweglichen Elemente 110, 260 entlang der y-Achse angeregt werden. Bei Auftreten einer Drehrate um die x-Achse wirken Coriolis-Kräfte auf die erste Detektionsmasse 130 und die zweite Detektionsmasse 270 und bewirken antiparallele Auslenkungen der Detektionsmassen 130, 270 in z-Richtung. Die Auslenkung der ersten Detektionsmasse 130 in z-Richtung kann mittels der ersten Elektrode 210 und der zweiten Elektrode 220 erfasst werden. Dazu kann beispielsweise die erste Elektrode 210 auf ein erstes Potential (CN-Potential) und die zweite Elektrode 220 auf ein zweites Potential (CP-Potential) gelegt werden. Durch die Auslenkung der ersten Detektionsmasse 130 in z-Richtung gegen die ortsfesten Elektroden 210, 220 ändern sich die Kapazitäten zwischen der ersten Detektionsmasse 130 und der ersten Elektrode 210 und der zweiten Elektrode 220 mit entgegengesetzten Vorzeichen. Dies gestattet eine volldifferentielle Messung der Auslenkung der ersten Detektionsmasse 130. Die ersten und zweiten Elektroden des zweiten beweglichen Elements 260 können beispielsweise spiegelverkehrt zum ersten beweglichen Element 110 auf das erste und das zweite Potential gelegt werden. Dadurch ist auch eine volldifferentielle Auswertung einer Auslenkung der zweiten Detektionsmasse 270 möglich. Beide beweglichen Elemente 110, 260 zusammengenommen erlauben außerdem eine volldifferentielle Bestimmung einer auf den Drehratensensor 100 wirkenden Drehrate.

Die ersten weiteren Elektroden 310 und die zweiten weiteren Elektroden 320 können beispielsweise zur Regelung der Lage der Detektionsmassen 130, 270 dienen. Die weiteren Elektroden 310, 320 können aber auch zur elektrostatischen Mitkopplung verwendet werden, um eine vollresonante Übereinstimmung der Frequenzen der Antriebsschwingung und der Detektionsschwingung der Detektionsmassen 130, 270 sicherzustellen. Durch die in z-Richtung beidseitig der Detektionsmassen 130, 270 angebrachten weiteren Elektroden 310, 320 kann die elektrostatische Mitkopplung ohne Veränderung der z-Position der Detektionsmassen 130, 270 erfolgen. Dadurch wird vermieden, dass sich eine kritische Spannung, ab der die anziehenden elektrostatischen Kräfte die mechanischen Rückstellkräfte übersteigen und es zu einer elektromechanischen Instabilität des Drehratensensors 100 kommt, reduziert. Ein weiterer Vorteil der beidseitigen Elektrodenanordnung ist, dass wegen der dadurch ermöglichten differentiellen Signalauswertung die Vibrationsempfindlichkeit des Drehratensensors 100 stark reduziert ist.

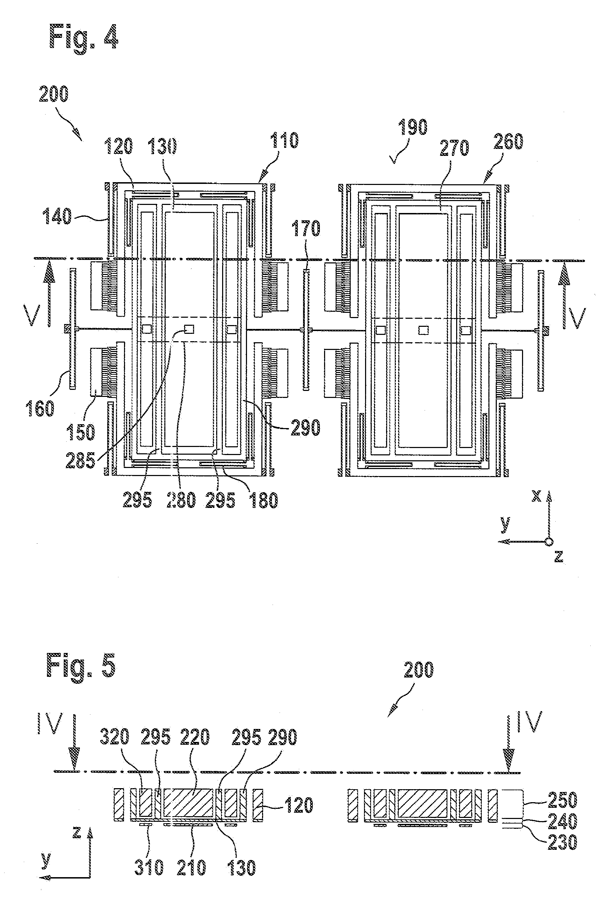

Figur 4 zeigt eine Aufsicht auf einen Drehratensensor 200 gemäß einer zweiten Ausführungsform. In Figur 5 ist ein zur y-z-Ebene paralleler Schnitt durch den Drehratensensor 200 dargestellt. Der Drehratensensor 200 unterscheidet sich vom Drehratensensor 100 der Figuren 1 bis 3 dadurch, dass die erste Detektionsmasse 130 zusätzlich zum Stabilisierungsrahmen 290 zwei weitere in x-Richtung verlaufende Stabilisierungsstreben 295 in der zweiten Funktionsebene 250 aufweist. Jede der Stabilisierungsstreben 295 verläuft in einem mittleren Bereich der wannenförmigen ersten Detektionsmasse 130 zwischen zwei einander gegenüberliegenden Kanten des Stabilisierungsrahmens 290. Die Stabilisierungsstreben 295 verleihen der ersten Detektionsmasse 130 zusätzliche Steifigkeit.

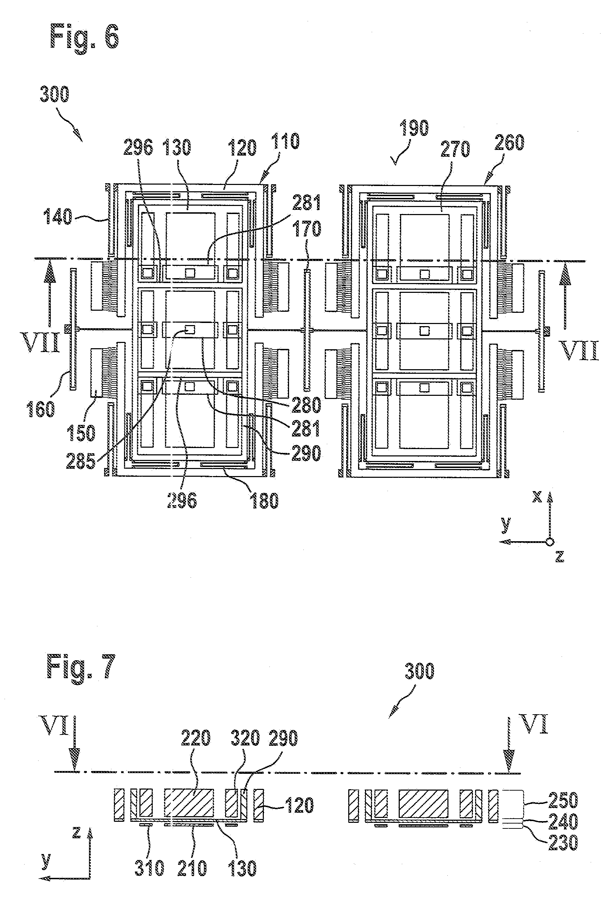

Figur 6 zeigt eine Aufsicht auf einen Drehratensensor 300 gemäß einer dritten Ausführungsform. In Figur 7 ist ein zur y-z-Ebene paralleler Schnitt durch den Drehratensensor 300 dargestellt. Der Drehratensensor 300 unterscheidet sich vom Drehratensensor 100 der Figuren 1 bis 3 dadurch, dass die erste Detektionsmasse 130 zusätzlich zum Stabilisierungsrahmen 290 zwei weitere in y-Richtung verlaufende Stabilisierungsstreben 296 in der zweiten Funktionsebene 250 aufweist. Die Stabilisierungsstreben 296 verlaufen in einem mittleren Bereich der wannenförmigen ersten Detektionsmasse 130 zwischen zwei gegenüberliegenden Kanten des Stabilisierungsrahmens 290 und verleihen der wannenförmigen ersten Detektionsmasse 130 zusätzliche Stabilität. Wegen der in y-Richtung verlaufenden Stabilisierungsstreben 296 ist die oberhalb der ersten Detektionsmasse 130 angeordnete zweite Elektrode 220 in drei Abschnitte unterteilt. Der mittlere Abschnitt der zweiten Elektrode 220 ist im Bereich des Durchbruchs 280 an einem Befestigungspunkt 285 mit der Substratoberfläche 190 verbunden. Die beiden anderen Bereiche der zweiten Elektrode 220 sind an zwei weiteren Durchbrüchen 281 durch die erste Detektionsmasse 130 und die erste Elektrode 210 über zusätzliche Befestigungspunkte 285 mit der Substratoberfläche 190 verbunden. Dies gilt entsprechend auch für die zweiten weiteren Elektroden 320.

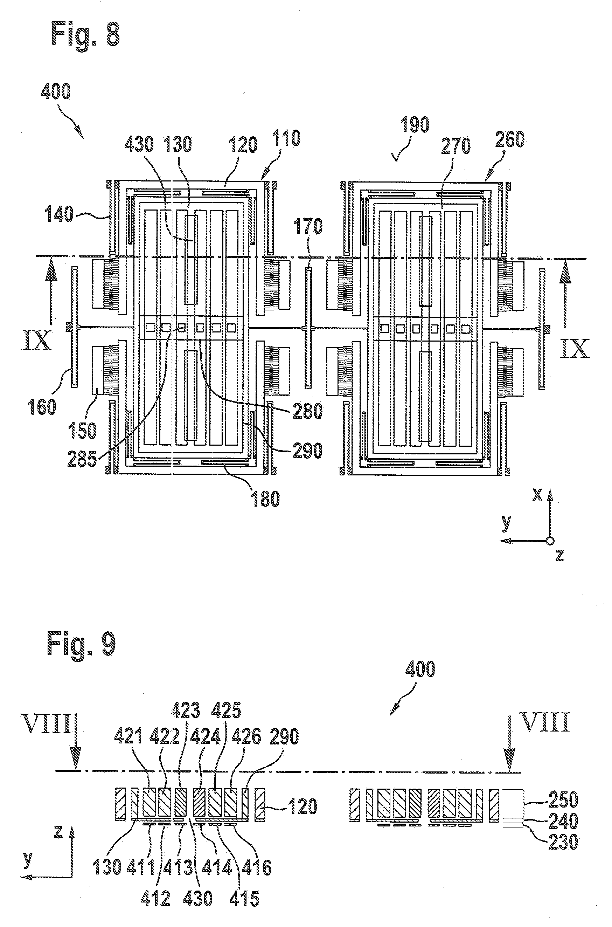

Figur 8 zeigt eine Aufsicht auf einen Drehratensensor 400 gemäß einer vierten Ausführungsform. In Figur 9 ist ein zur y-z-Ebene paralleler Schnitt durch den Drehratensensor 400 gezeigt. Im Unterschied zum Drehratensensor 100 der Figuren 1 bis 3 weist die erste Detektionsmasse 130 des ersten beweglichen Elements 110 des Drehratensensors 400 zwei in x-Richtung verlaufende Schlitze 430 auf. Es ist je ein Schlitz 430 in y-Richtung mittig zu beiden Seiten des Durchbruchs 280 angeordnet.

Ein weiterer Unterschied des Drehratensensors 400 zum Drehratensensor 100 besteht darin, dass unterhalb der ersten Detektionsmasse 130 des ersten beweglichen Elements 110 anstelle der ersten Elektrode 210 und der ersten weiteren Elektroden 310 insgesamt sechs untere Elektroden 411, 412, 413, 414, 415, 416 vorgesehen sind. Entsprechend sind in der zweiten Funktionsebene 250 oberhalb der ersten Detektionsmasse 130 des ersten beweglichen Elements 110 anstelle der zweiten Elektrode 220 und der zweiten weiteren Elektrode 320 insgesamt sechs obere Elektroden 421, 422, 423, 424, 425, 426 vorgesehen. Die unteren Elektroden 411-416 und die oberen Elektroden 421-426 haben die Form nebeneinanderliegender schmaler, in x-Richtung orientierter Streifen. Die beiden äußersten oberen Elektroden 421, 426 und die beiden äußersten unteren Elektroden 411, 416 können wie die ersten und zweiten weiteren Elektroden 310, 320 der Figuren 1 bis 3 zur Lageregelung der ersten Detektionsmasse 130 oder zur elektrostatischen Mitkopplung dienen. Die zweiten und fünften oberen Elektroden 422, 425 und die zweiten und fünften unteren Elektroden 412, 415 können wie die ersten und zweiten Elektroden 210, 220 der Figuren 1 bis 3 zur volldifferentiellen Erfassung einer Auslenkung der ersten Detektionsmasse 130 in z-Richtung dienen. Die beiden innen gelegenen oberen Elektroden 423, 424 und die beiden innen gelegenen unteren Elektroden 413, 414 überlappen teilweise mit den Schlitzen 430 in der ersten Detektionsmasse 130. Die obere Elektrode 423 auf einer Seite eines Schlitzes 430 und die untere Elektrode 414 auf der anderen Seite des Schlitzes 430 bilden ein erstes Paar. Die beiden anderen inneren Elektroden 413, 424 bilden entsprechend ein zweites Paar. Durch Anlegen einer Gleichspannung an eines der Paare von Elektroden kann eine zur Auslenkung der ersten Detektionsmasse 130 proportionale Kraft in z-Richtung auf die erste Detektionsmasse 130 ausgeübt werden. Diese kann zur Kompensation von Quadraturkräften dienen. Dies bedeutet, dass ein mechanisches und/oder elektrisches Übersprechen der Antriebsbewegung in den Detektionspfad kompensiert wird. Da das Übersprechen ebenfalls proportional zur Auslenkung der ersten Detektionsmasse 130 ist, kann das Übersprechen durch auslenkungsproportionale Kräfte kompensiert werden. Das erste Paar der Elektroden 423, 414 dient beispielsweise zur Unterdrückung einer positiven Quadratur, das zweite Paar zur Unterdrückung einer negativen Quadratur.

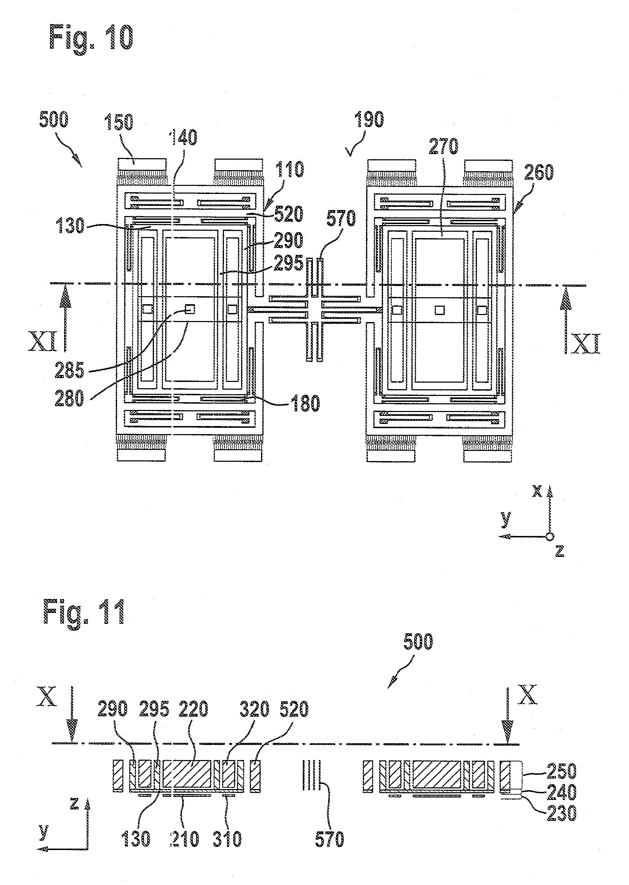

Figur 10 zeigt eine schematische Aufsicht auf einen Drehratensensor 500 gemäß einer fünften Ausführungsform. Figur 11 zeigt einen zu einer y-z-Ebene parallelen Schnitt durch den Drehratensensor 500. Im Unterschied zum Drehratensensor 100 der Figuren 1 bis 3 weist der Drehratensensor 500 das erste bewegliche Element 110 einen veränderten Antriebsrahmen 520 auf. Die Antriebskammstrukturen 150 des ersten beweglichen Elements 110 des Drehratensensors 500 sind an zwei zur y-Achse parallelen Außenkanten des Antriebsrahmens 520 angeordnet und dazu ausgebildet, das erste bewegliche Element 110 in eine Schwingung mit zur x-Achse paralleler Auslenkung anzuregen. Die Antriebsfedern 140 des ersten beweglichen Elements 110 sind in einem vom Antriebsrahmen 520 kastenförmig umschlossenen Bereich des ersten beweglichen Elements 110 angeordnet und derart ausgebildet, dass sie eine Bewegung des ersten beweglichen Elements 110 in x-Richtung gestatten, in y- und z-Richtung jedoch steif sind. Das zweite bewegliche Element 260 des Drehratensensors 500 ist wiederum symmetrisch zum ersten beweglichen Element 110 ausgebildet und in y-Richtung neben dem ersten beweglichen Element 110 über der Substratoberfläche 190 angeordnet. Beim Drehratensensor 500 sind die erste Detektionsmasse 130 und die zweite Detektionsmasse 270 anders als beim Drehratensensor 100 der Figuren 1 bis 3 nicht über Außenfedern 160 mit der Substratoberfläche 190 verbunden. Die erste Detektionsmasse 130 und die zweite Detektionsmasse 270 weisen wie beim Drehratensensor 200 der Figuren 4 und 5 in x-Richtung verlaufende Stabilisierungsstreben 295 auf. In alternativen Ausführungsformen können diese entfallen.

Die erste Detektionsmasse 130 des ersten beweglichen Elements 110 und die zweite Detektionsmasse 270 des zweiten beweglichen Elements 260 sind über eine Koppelfeder 570 miteinander verbunden. Die Koppelfeder 570 unterscheidet sich von der Koppelfeder 170 der Figuren 1 dadurch, dass sie in alle drei Raumrichtungen eine festgelegte Elastizität aufweist. Die Koppelfeder 570 kann beispielsweise aus einem mehrfach gefalteten Substratbalken bestehen, der mäanderförmige Bereiche mit zur y- und zur x-Achse parallelen Abschnitten aufweist.

Das erste bewegliche Element 110 und das zweite bewegliche Element 260 des Drehratensensors 500 können mittels der Antriebskammstrukturen 150 in eine gekoppelte Antriebsschwingung mit antiparalleler Auslenkung der beweglichen Elemente 110, 260 entlang der x-Achse angeregt werden. Bei Auftreten einer Drehrate um die y-Achse wirken Coriolis-Kräfte auf die erste Detektionsmasse 130 und die zweite Detektionsmasse 270 und bewirken antiparallele Auslenkungen der Detektionsmassen 130, 270 in z-Richtung. Die Detektion der Auslenkungen erfolgt wie anhand der vorhergehenden Figuren erläutert.

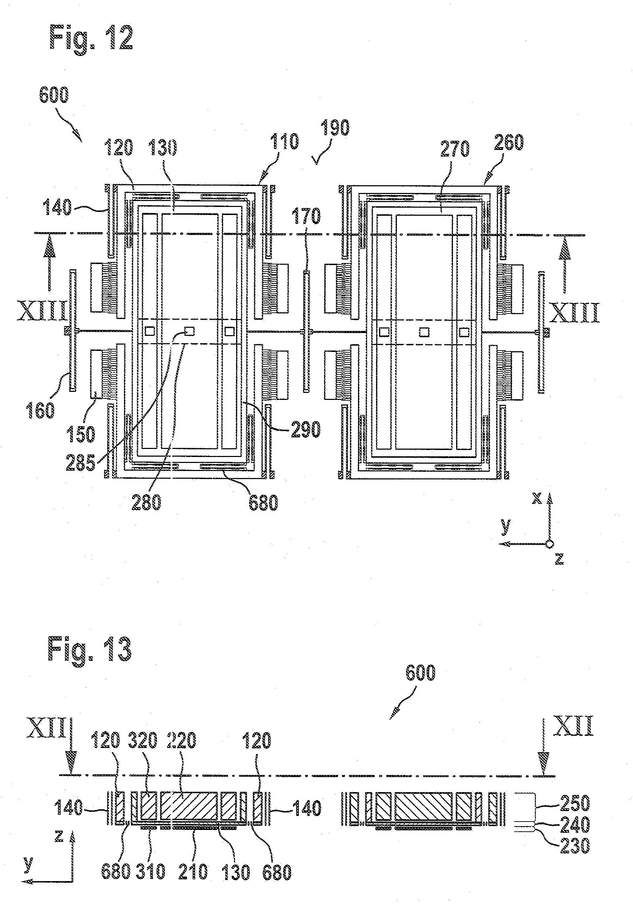

Figur 12 zeigt eine schematische Aufsicht auf einen Drehratensensor 600 gemäß einer sechsten Ausführungsform. Figur 13 zeigt einen zur y-z-Ebene parallelen Schnitt durch den Drehratensensor 600. Der Drehratensensor 600 der Figur 12 unterscheidet sich vom Drehratensensor 100 der Figur 1 dadurch, dass die erste Detektionsmasse 130 nicht über Detektionsfedern 180, sondern über Detektionsfedern 680 mit Antriebsrahmen 120 verbunden ist. Die Detektionsfedern 680 sind, wie in Figur 13 dargestellt, lediglich in der ersten Funktionsebene 240 ausgeführt. Durch die wesentlich geringere Dicke der ersten Funktionsebene 240 gegenüber der zweiten Funktionsebene 250 weisen die Detektionsfedern 680 eine sehr geringere Steifigkeit in z-Richtung auf als die Detektionsfedern 180 der Figuren 1 bis 3. Dadurch können die Detektionsfedern 680 kürzer ausgebildet sein als die Detektionsfedern 180, um die gleiche Steifigkeit in z-Richtung zu erreichen. Dadurch ergibt sich eine wesentlich höhere Steifigkeit der Detektionsfedern 680 in x- und y-Richtung. Dadurch werden etwaige Störmoden, z. B. Rotationsmoden der Detektionsmasse 130 um die z-Achse wirksam unterdrückt und spielen erst bei deutlich höheren Frequenzen als im Stand der Technik eine Rolle.

Die Drehratensensoren 100, 200, 300, 400, 500, 600 können mit einer nicht dargestellten Steuer- und Auswertelektronik verbunden sein. Diese Elektronik erzeugt geeignete Antriebsspannungen an den Antriebskammstrukturen und wertet die Kapazitätssignale der Elektroden aus, um eine auf den Drehratensensor wirkende Drehrate zu bestimmen. Die Elektronik kann auch die beschriebene Lageregelung der Detektionsmassen, die elektrostatische Mittkopplung oder die Quadraturkompensation durchführen.

Die Ausführungsformen der Figuren 1 bis 13 können durch einen Fachmann in nahezu beliebiger Weise kombiniert werden.

## Patentansprüche

1. Drehratensensor (100) mit
einem Substrat mit einer Substratoberfläche (190),
einem über der Substratoberfläche (190) angeordneten ersten beweglichen Element (110) mit einem Antriebsrahmen (120, 520) und einer ersten Detektionsmasse (130),
einer ersten Elektrode (210), die beabstandet unterhalb der ersten Detektionsmasse (130) angeordnet und mit der Substratoberfläche (190) verbunden ist
wobei der Antriebsrahmen (120, 520) über mindestens eine Antriebsfeder (140) mit dem Substrat verbunden ist,
wobei die Detektionsmasse (130) über mindestens eine Detektionsfeder (180, 680) mit dem Antriebsrahmen (120, 520) verbunden ist,
wobei das erste bewegliche Element (110) zu einer Antriebsschwingung parallel zur Substratoberfläche (190) anregbar ist,
und wobei die erste Detektionsmasse (130) senkrecht zur Substratoberfläche (190) auslenkbar ist, **gekennzeichnet durch** eine zweite Elektrode (220),
die beabstandet oberhalb der Detektionsmasse (130) angeordnet und mit der Substratoberfläche (190) verbunden ist.

2. Drehratensensor (100) nach Anspruch 1,
wobei eine Leiterbahnebene (230), eine erste Funktionsebene (240) und eine zweite Funktionsebene (250) geschichtet übereinander angeordnet sind,
wobei die Leiterbahnebene (230) mit der Substratoberfläche (190) verbunden ist, wobei der Antriebsrahmen (120) in der ersten Funktionsebene (240) und in der zweiten Funktionsebene (250) angeordnet ist,
wobei die erste Detektionsmasse (130) zumindest teilweise in der ersten Funktionsebene (240) angeordnet ist,
wobei die erste Elektrode (210) in der Leiterbahnebene (230) angeordnet ist, und wobei die zweite Elektrode (220) in der zweiten Funktionsebene (250) angeordnet ist.

3. Drehratensensor (100) nach Anspruch 1 oder 2,
wobei der Drehratensensor (100) ein zweites bewegliches Element (260) mit einer zweiten Detektionsmasse (270) aufweist,
wobei die erste und die zweite Detektionsmasse (130, 270) über eine Koppelfeder (170, 570) miteinander verbunden sind,
wobei das erste und das zweite bewegliche Element (110, 260) zu einer gekoppelten Antriebsschwingung parallel zur Substratoberfläche (190) anregbar sind.

4. Drehratensensor (100) nach Anspruch 3,
wobei das erste und das zweite bewegliche Element (110, 260) zu einer gekoppelten Antriebsschwingung mit antiparalleler Auslenkung des ersten und des zweiten beweglichen Elements (110, 260) anregbar sind.

5. Drehratensensor (100) nach einem der vorhergehenden Ansprüche,
wobei das erste bewegliche Element (110) einen Stabilisierungsrahmen (290) aufweist, der zumindest teilweise in der zweiten Funktionsebene (250) angeordnet ist.

6. Drehratensensor (100) nach Anspruch 5,
wobei das erste bewegliche Element (110) eine Wannenform mit einem in der ersten Funktionsebene (240) angeordneten Boden und einem durch den Stabilisierungsrahmen (290) gebildeten Rand in der ersten Funktionsebene (240) und der zweiten Funktionsebene (250) aufweist.

7. Drehratensensor (100) nach einem der vorhergehenden Ansprüche, wobei das erste bewegliche Element (110) mindestens einen Durchbruch (280) aufweist,
wobei die zweite Elektrode (220) durch den Durchbruch (280) an einem Befestigungspunkt (285) mit der Substratoberfläche (190) verbunden ist.

8. Drehratensensor (100) nach einem der vorhergehenden Ansprüche,
wobei mindestens eine Antriebskammstruktur (150) vorhanden ist, um das erste bewegliche Element (110) zu der Antriebsschwingung anzuregen.

9. Drehratensensor (100) nach einem der vorhergehenden Ansprüche,
wobei das erste bewegliche Element (110) über mindestens eine Außenfeder (160) mit der Substratoberfläche (190) verbunden ist.

10. Drehratensensor (100) nach einem der vorhergehenden Ansprüche,
wobei die erste Funktionsebene (240) und die zweite Funktionsebene (250) aus leitfähigem Silizium bestehen.

11. Drehratensensor (100) nach einem der vorhergehenden Ansprüche,
wobei mindestens eine weitere Elektrode (310, 320) unterhalb und/oder oberhalb der ersten Detektionsmasse (130) angeordnet ist.

12. Drehratensensor (100) nach Anspruch 11,
wobei die mindestens eine weitere Elektrode (310, 320) für eine elektrostatische Mitkopplung der ersten Detektionsmasse (130), eine Lageregelung der ersten Detektionsmasse (130) und/oder eine Quadraturkompensation ausgebildet ist.

13. Drehratensensor (100) nach einem der vorhergehenden Ansprüche,
wobei der Drehratensensor (100) mit einer Auswertschaltung verbunden ist, die dazu ausgebildet ist,
aus einer Änderung von Kapazitäten zwischen der ersten Detektionsmasse (130) und den ersten und zweiten Elektroden (210, 220) auf eine Auslenkung der ersten Detektionsmasse (130) senkrecht zur Substratoberfläche (190) zu schließen, und aus der Auslenkung der ersten Detektionsmasse (130) auf eine auf den Drehratensensor (100) wirkende Drehrate zu schließen.

## Claims

1. Yaw rate sensor (100) comprising:
a substrate with a substrate surface (190),
a first movable element (110), which is disposed above the substrate surface (190) and has a drive frame (120, 520) and a first detection mass (130),
a first electrode (210), which is disposed at a distance underneath the first detection mass (130) and is connected to the substrate surface (190),
wherein the drive frame (120, 520) is connected to the substrate by way of at least one drive spring (140),
wherein the detection mass (130) is connected to the drive frame (120, 520) by way of at least one detection spring (180, 680),
wherein the first movable element (110) can be excited to undergo a drive oscillation parallel to the substrate surface (190), and
wherein the first detection mass (130) can be deflected perpendicular to the substrate surface (190), **characterized by** a second electrode (220), which is disposed at a distance above the detection mass (130) and is connected to the substrate surface (190).

2. Yaw rate sensor (100) according to Claim 1,
wherein a conductor track plane (230), a first functional plane (240) and a second functional plane (250) are disposed in layers one on top of the other,
wherein the conductor track plane (230) is connected to the substrate surface (190),
wherein the drive frame (120) is disposed in the first functional plane (240) and in the second functional plane (250),
wherein the first detection mass (130) is disposed at least partially in the first functional plane (240),
wherein the first electrode (210) is disposed in the conductor track plane (230),
and wherein the second electrode (220) is disposed in the second functional plane (250).

3. Yaw rate sensor (100) according to Claim 1 or 2,
wherein the yaw rate sensor (100) has a second movable element (260), which has a second detection mass (270),
wherein the first and the second detection mass (120, 270) are connected to one another by way of a coupling spring (170, 570),
wherein the first and the second movable element (110, 260) can be excited to undergo a coupled drive oscillation parallel to the substrate surface (190).

4. Yaw rate sensor (100) according to Claim 3,
wherein the first and the second movable element (110, 260) can be excited to undergo a coupled drive oscillation with antiparallel deflection of the first and the second movable element (110, 260).

5. Yaw rate sensor (100) according to one of the preceding claims,
wherein the first movable element (110) has a stabilizing frame (290), which is disposed at least partially in the second functional plane (250).

6. Yaw rate sensor (100) according to Claim 5,
wherein the first movable element (110) has a trough shape with a base disposed in the first functional plane (240) and a periphery, formed by the stabilizing frame (290), in the first functional plane (240) and the second functional plane (250).

7. Yaw rate sensor (100) according to one of the preceding claims,
wherein the first movable element (110) has at least one opening (280),
wherein the second electrode (220) is connected to the substrate surface (190) through the opening (280) at a fastening point (285).

8. Yaw rate sensor (100) according to one of the preceding claims,
wherein there is at least one drive comb structure (150) to excite the first movable element (110) to undergo the drive oscillation.

9. Yaw rate sensor (100) according to one of the preceding claims,
wherein the first movable element (110) is connected to the substrate surface (190) by way of at least one external spring (160).

10. Yaw rate sensor (100) according to one of the preceding claims,
wherein the first functional plane (240) and the second functional plane (250) consist of conductive silicon.

11. Yaw rate sensor (100) according to one of the preceding claims,
wherein at least one further electrode (310, 320) is disposed underneath and/or above the first detection mass (130).

12. Yaw rate sensor (100) according to Claim 11,
wherein the at least one further electrode (310, 320) is designed for an electrostatic positive feedback of the first detection mass (130), a closed-loop position control of the first detection mass (130) and/or a quadrature compensation.

13. Yaw rate sensor (100) according to one of the preceding claims,
wherein the yaw rate sensor (100) is connected to an evaluation circuit, which is designed to infer a deflection of the first detection mass (130) perpendicular to the substrate surface (190) from a change in capacitances between the first detection mass (130) and the first and second electrodes (210, 220), and to infer a yaw rate acting on the yaw rate sensor (100) from the deflection of the first detection mass (130).

## Revendications

1. Capteur de vitesse de rotation (100) comprenant un substrat doté d'une surface de substrat (190),
un premier élément mobile (110) disposé au-dessus de la surface de substrat (190) et doté d'un cadre d'entraînement (120, 520) et d'une première masse de détection (130),
une première électrode (210) qui est disposée à distance au-dessous de la première masse de détection (130) et reliée à la surface de substrat (190),
le cadre d'entraînement (120, 520) étant relié au substrat par le biais d'au moins un ressort d'entraînement (140),
la masse de détection (130) étant reliée au cadre d'entraînement (120, 520) par le biais d'au moins un ressort de détection (180, 680),
le premier élément mobile (110) pouvant être excité en une oscillation d'entraînement parallèle à la surface de substrat (190),
et la première masse de détection (130) pouvant être déviée perpendiculairement à la surface de substrat (190), **caractérisé par** une deuxième électrode (220) qui est disposée à distance au-dessus de la masse de détection (130) et reliée à la surface de substrat (190).

2. Capteur de vitesse de rotation (100) selon la revendication 1, avec lequel un plan de piste conductrice (230), un premier plan fonctionnel (240) et un deuxième plan fonctionnel (250) étant disposés en couches les uns au-dessus des autres, le plan de piste conductrice (230) étant relié à la surface de substrat (190), le cadre d'entraînement (120) étant disposé dans le premier plan fonctionnel (240) et le deuxième plan fonctionnel (250), la première masse de détection (130) étant disposée au moins partiellement dans le premier plan fonctionnel (240), la première électrode (210) étant disposée dans le plan de piste conductrice (230) et la deuxième électrode (220) étant disposée dans le deuxième plan fonctionnel (250).

3. Capteur de vitesse de rotation (100) selon la revendication 1 ou 2, avec lequel le capteur de vitesse de rotation (100) possède un deuxième élément mobile (260) doté d'une deuxième masse de détection (270),
la première et la deuxième masse de détection (130, 270) étant reliées l'une à l'autre par le biais d'un ressort d'accouplement (170, 570),
le premier et le deuxième élément mobile (110, 260) pouvant être excités en une oscillation d'entraînement couplée parallèle à la surface de substrat (190).

4. Capteur de vitesse de rotation (100) selon la revendication 3, avec lequel le premier et le deuxième élément mobile (110, 260) peuvent être excités en une oscillation d'entraînement couplée avec une déviation antiparallèle du premier et du deuxième élément mobile (110, 260).

5. Capteur de vitesse de rotation (100) selon l'une des revendications précédentes, avec lequel le premier élément mobile (110) possède un cadre de stabilisation (290) qui est disposé au moins partiellement dans le deuxième plan fonctionnel (250).

6. Capteur de vitesse de rotation (100) selon la revendication 5, avec lequel le premier élément mobile (110) présente la forme d'une cuvette dotée d'un fond disposé dans le premier plan fonctionnel (240) et d'un bord formé par le cadre de stabilisation (290) dans le premier plan fonctionnel (240) et le deuxième plan fonctionnel (250).

7. Capteur de vitesse de rotation (100) selon l'une des revendications précédentes, avec lequel le premier élément mobile (110) possède au moins une traversée (280), la deuxième électrode (220) étant reliée à travers la traversée (280) à la surface de substrat (190) à un point de fixation (285).

8. Capteur de vitesse de rotation (100) selon l'une des revendications précédentes, avec lequel il existe au moins une structure en peigne d'entraînement (150) pour exciter le premier élément mobile (110) en l'oscillation d'entraînement.

9. Capteur de vitesse de rotation (100) selon l'une des revendications précédentes, avec lequel le premier élément mobile (110) est relié à la surface de substrat (190) par le biais d'au moins un ressort externe (160).

10. Capteur de vitesse de rotation (100) selon l'une des revendications précédentes, avec lequel le premier plan fonctionnel (240) et le deuxième plan fonctionnel (250) sont constitués de silicium conducteur.

11. Capteur de vitesse de rotation (100) selon l'une des revendications précédentes, avec lequel au moins une électrode supplémentaire (310, 320) est disposée au-dessous et/ou au-dessus de la première masse de détection (130).

12. Capteur de vitesse de rotation (100) selon la revendication 11, avec lequel l'au moins une électrode supplémentaire (310, 320) est configurée pour un couplage électrostatique commun de la première masse de détection (130), une régulation de la position de la première masse de détection (130) et/ou une compensation en quadrature.

13. Capteur de vitesse de rotation (100) selon l'une des revendications précédentes, avec lequel le capteur de vitesse de rotation (100) est relié à un circuit d'interprétation qui est configuré pour, à partir d'une modification des capacités entre la première masse de détection (130) et les première et deuxième électrodes (210, 220), déduire une déviation de la première masse de détection (130) perpendiculairement à la surface de substrat (190), et à partir de la déviation de la première masse de détection (130), déduire une vitesse de rotation agissant sur le capteur de vitesse de rotation (100).
